# EUROPEAN PATENT SPECIFICATION

(11) **EP 4 589 459 B1**
(45) Date of publication and mention of the grant of the patent: **30.09.2026**
(21) Application number: 24153095.5
(22) Date of filing: 22.01.2024
(51) Int. Cl.: G06F 21/57, H04W 12/30, H04W 4/80, G06F 21/72

(54) **NFC "SPLIT STACK" ARCHITECTURE WITH TAMPER SECURE WIRELESS INTERFACE CONTROLLER**
NFC-SPLIT-STACK-ARCHITEKTUR MIT MANIPULATIONSSICHERER DRAHTLOSER SCHNITTSTELLENSTEUERUNG
ARCHITECTURE NFC SPLIT STACK AVEC CONTRÔLEUR D'INTERFACE SANS FIL SÉCURISÉ CONTRE LA FRAUDE

(43) Date of publication of application: 23.07.2025
(73) Proprietor: Renesas Design Austria GmbH, 8041 Graz (AT)
(72) Inventor: Goitre, Alessandro, 8041 Graz (AT); Renno, David, 8041 Graz (AT)
(74) Representative: Schwarz & Partner Patentanwälte GmbH

(56) References cited:
- EP-A1- 3 033 853
- EP-A1- 3 160 165
- EP-B1- 3 033 853

## Description

### FIELD OF THE INVENTION

The present invention relates to a device built to process a wireless interface communication type application, which device comprises:
a host controller circuit built to process device applications, that use the wireless interface communication type application, and built to process a host driver that communicates wired based on a first interface protocol;
a wireless interface controller circuit built to process a wireless interface for the wireless interface communication type application and built to process a controller driver that communicates wired with the host controller circuit;
and wherein the host controller circuit is built to process a first transmission module that communicates wired with the host driver based on the first interface protocol and communicates wired with the controller driver based on a second interface protocol.

The present invention furthermore relates to a chipset for such a device and a method to process a wireless interface communication type application with such a device.

### BACKGROUND OF THE INVENTION

Document US 2009/0206984 A1 discloses such a device like a mobile phone with Near Field Communication (NFC) functionality as one example of a wireless interface communication type application. Other wireless interface communication type applications may be Ultra-Wideband or Bluetooth^{®} or other comparable technologies. NFC technology has been developed by an industry consortium under the name of NFC Forum (http://www.nfc-forum.ofg) and derives from RFID technology. NFC components may operate in a "Reader" mode, a "Card Emulation" mode and a "Device" mode as standardized in ISO 18.092. An NFC component emits via its Near Field Communication contactless interface magnetic fields, sends data by modulating the amplitude of the magnetic field, and receives data by load modulation and inductive coupling. In the emulation mode, described for instance in EP 1 327 222, the NFC component operates passively like a transponder to engage in a dialog with another reader and to be seen by the other readers as an RFID chip.

A device disclosed in US 2009/0206984 A1 comprises a host controller circuit or mobile phone processor that processes all device applications relevant for the normal telephone functionality. These applications for instance enable to take a call, send a SMS or search the Internet. To add the Near Field Communication feature to this mobile phone a separate integrated circuit named NFC controller circuit (wireless interface controller circuit) has been added to this mobile phone. The NFC Forum Specification "NFC Controller Interface (NCI)" defines the interface protocol to be used to enable wired communication between the host controller circuit and the NFC controller circuit. The host controller circuit implements this NCI Interface with a stack of software named host driver that communicates based on the NCI interface with a stack of software named controller driver processed in the NFC controller circuit.

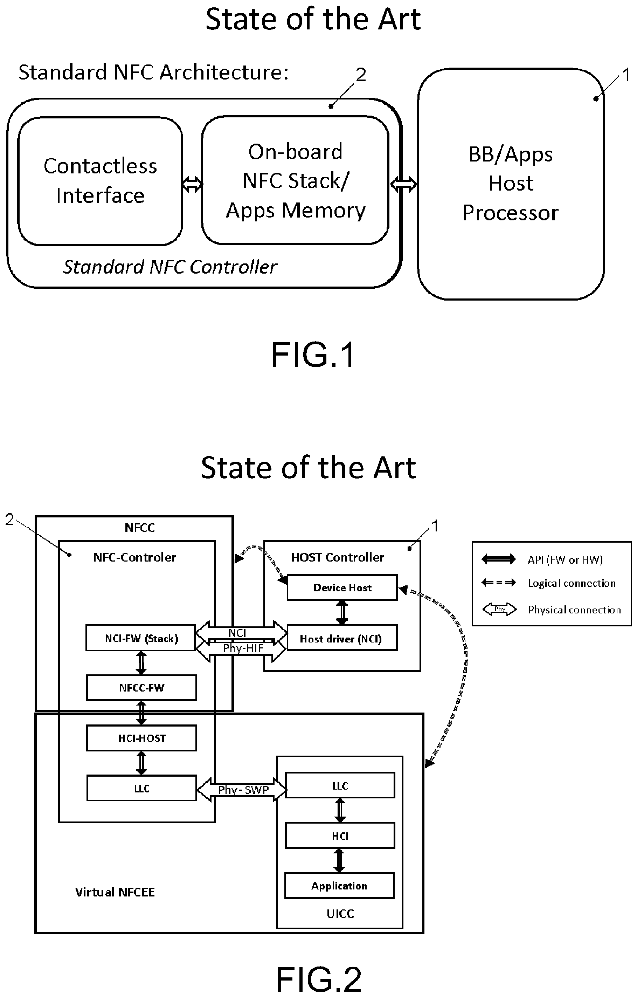

Figure 1 shows a typical set-up of a host controller circuit 1 and a NFC controller circuit 2 of a standard NFC architecture of a state of the art device. Figure 2 shows a more detailed block diagram of functionalities processed within these two integrated circuits and a smart card (UICC) connected to the NFC controller circuit 2 via a Single Wire Protocol. The device host of the host controller circuit processes device applications that use the Near Field communication application partially processed in the device host and partially processed in the NCI-FW (Stack) of the NFC controller circuit 2. The NCI-FW (Stack) in this standard NFC architecture enables the communication with the host controller circuit 1 via the NCI interface as controller driver.

Drawback for this standard NFC architecture is a limited ability to update the part of the Near Field communication application processed in the NFC controller circuit 2. The NCI interface does not enable an easy and fast way of such an over the air update. In particular as most of the times the NFC controller circuit 2 for a mobile phone manufacturer is a third party integrated circuit with very limited influence on updates of firmware processed on the NFC controller circuit 2. Furthermore, the NFC controller circuit 2 has only limited memory space and processing capacity compared to the host controller circuit 1, what limits the possibility to enable e.g. a multitude of new payment applications from different credit card companies.

Prior art document EP 3 160 165 B1 discloses a "split stack" architecture that moves tasks or parts of the Near Field Communication type application, that are none-time critical and/or memory consuming, from the NFC controller circuit into the host controller circuit. Time critical and performance critical tasks or parts of the Near Field Communication type application are still located within the NFC controller circuit to ensure correct communication towards the Near Field Communication contactless interface. In addition to that very limited other tasks of e.g. recurring processes may be processed by the NFC controller circuit. As a result, substantially all of the software stack of the Near Field Communication type application resides within the host processor circuit, which is a fast processor with substantial memory resources and directly connected to the device application of the mobile phone with its telephone or WLAN data transfer functionality to enable over the air updates of the Near Field Communication type application.

This "split stack" architecture is enabled by splitting-up the controller firmware of the standard NFC architecture into a split part of the firmware that still resides in the NFC controller circuit, which is named controller firmware and is more hardware related to the hardware of the NFC controller circuit, compared to the other split part of the controller firmware of the standard NFC architecture that is moved into the host controller circuit. An update of this firmware moved into the host controller circuit is much easier with the "split stack" NFC architecture compared to the NFC standard architecture, because the update of the split part of the firmware moved into the host controller cirucit is under full control of the host controller circuit and can therefore be updated and checked independantly from the NFC controller circuit.

Drawback of this known "split stack" architecture and this known NFC standard architecture is that the controller firmware stored in the NFC controller circuit is highly relevant for a secure transfer of payment or key information to for instance open a door or a safe. With a so called "man in the middle attack" a hacker tries to manipulate this controller firmware to open up this secure transfer and gain information about the secret payment or key information transmitted with the NFC interface within a secure channel. This may result in a reduced security of such payment or key information during a transfer within the secure channel from the mobile via the NFC interface and a payment terminal to the server of a credit card company.

Prior art document EP 3 033 853 A1 (WO 2015/023254 A1) discloses a device for secure near field communication, which device comprises an application processor. A near field communication controller interface packet is wrapped into a host controller protocol packet to be received by a tunneling module of an NFC controller of the device, to obtain the near field communication controller interface packet by unwrapping the host controller protocol packet.

### SUMMARY OF THE INVENTION

It is an object of the invention to provide a device and a chipset for such a device and a method that processes wireless interface communication type applications with an improved security against hacker attacks.

This object is achieved with a device according to claim 1 and a chipset according to claim 7 and a method according to claim 8.

The claimed device or mobile comprises a secure element circuit to store secure payment or key information to enable for instance the NFC payment application to pay with the mobile at a payment terminal in a shop. To ensure improved security against hacker attacks that try to alter the stack of controller firmware/software to gain access to secure information, the claimed device comprises a boot loader circuit as part of the wireless interface controller circuit, which at any time observes the integrity of the controller firmware stored in a memory of the wireless interface controller circuit and processed by the wireless interface controller circuit. To achieve that, several relevant features of the invention have to be set-up in combination. First, there has to be a direct hardware connection between a secure element circuit that stores the controller firmware and the wireless interface controller circuit to ensure save transfer of information via a direct wired interface. Second, the secure element circuit has to store the approved and correct stack of controller firmware to avoid access of a hacker to this approved correct version of the controller firmware. Third, the boot loader circuit is built to request a transfer of the stack of controller firmware from the secure element circuit to the memory of the wireless interface controller circuit. This memory may be a FLASH or RAM or ROM or any other type of memory to enable processing of the stored controller firmware by the wireless interface controller circuit. This request for a transfer of the stack of controller firmware may be sent by the boot loader circuit of the wireless interface controller circuit during a boot routine immediately after power-on of the wireless interface controller circuit to enable the wireless interface controller circuit to start its work. The combination of all these features ensure, that the wireless interface controller circuit already from power-on always processes the approved untampered controller firmware to avoid any security issue during transfer of other secure information stored in the secure element circuit.

The boot loader circuit furthermore may at any time after power-on during normal processing take measures to ensure integrity of the controller firmware processed. These measures may include to request a hash value or other comparable integrity information about the stack of controller firmware stored in the secure element circuity from the secure element circuity to compare it with the integrity information evaluated from the controller firmware actually processed by the wireless interface controller circuit. In case the comparison of the received and evaluated integrity information provides differences, the boot loader circuit may react in different ways. It may send a new request for a transfer of the stack of controller firmware and replace the actual processed and in the memory of the wireless interface controller circuit stored controller firmware by the correct and approved version received from the secure element circuitry. The boot loader circuit in the same or another embodiment of the invention may send information via the wired interface to the host controller or via the NFC wireless interface to another NFC device that a hacker attack has been identified. In the same or other embodiments of the invention, the device could be built to realize other wireless interface communication type applications like for instance Ultra-Wideband with a UWB controller or Bluetooth^{®} with a BT controller or other comparable wireless technologies.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 and 2 show a standard NFC architecture in a device according to the state of the art.
Figures 3 discloses a block diagram and figure 4 shows a software module diagram of a "split stack" NFC architecture in a device according to the state of the art.
Figure 5 discloses a detailed block diagram how a device with the "split stack" NFC architecture according to the invention processes a Near Field Communication application to emulate a smart card via a smart card as secure element.
Figures 6 discloses a more generalized block diagram how a device with the "split stack" NFC architecture and a boot loader circuit according to the invention enables NFC and Ultra-Wideband interface communication type applications.

### DETAILED DESCRIPTION OF EMBODIMENTS

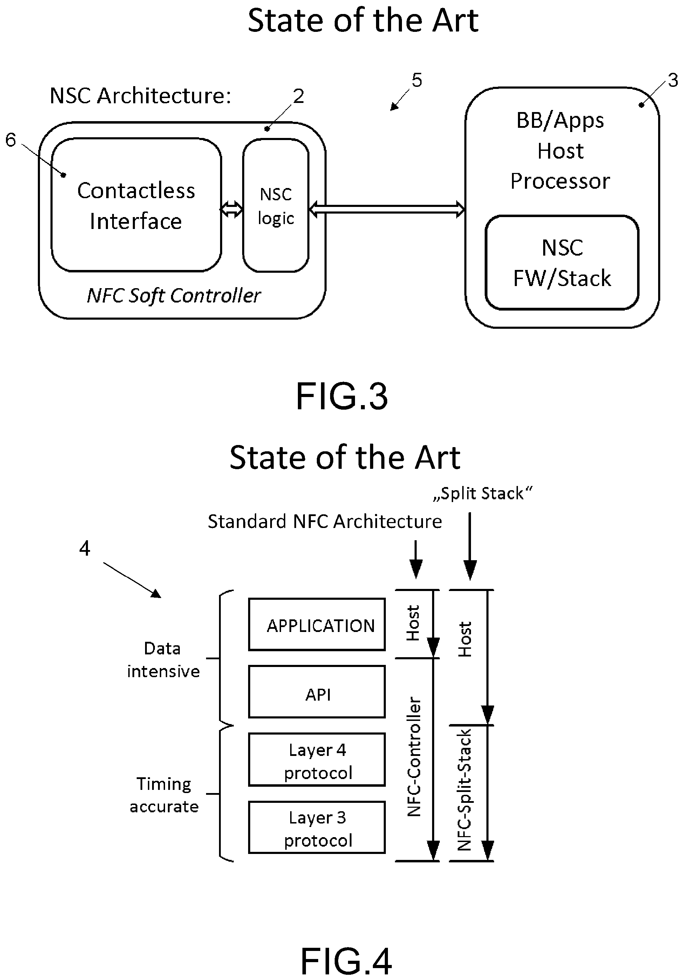

Figures 1 and 2 disclose a host controller circuit 1 and a NFC controller circuit 2 of a state of the art mobile phone as explained above. Figure 3 discloses a block diagram of a "split stack" NFC architecture in a device according to the state of the art. A mobile phone 5 comprises a host controller circuit 3 and a NFC controller circuit 2 with a contactless interface 6. Mobile phone 5 comprises all kind of state of the art modules, not shown in the figures, to process device applications and to realize the normal phone functionalities as for instance to enable to take a call, send a SMS or search the Internet. The host controller circuit 3 is the main processor of the mobile phone 5 that masters all these tasks and interfaces with other integrated circuits of the mobile phone 5, like the NFC controller circuit 2, to enable such other functionalities. Figure 4 discloses a software module diagram 4 with a comparison of software module functionalities of the NFC standard architecture in the device disclosed in figures 1 and 2 and of the "split stack" NFC architecture in the device 5 disclosed in figure 3.

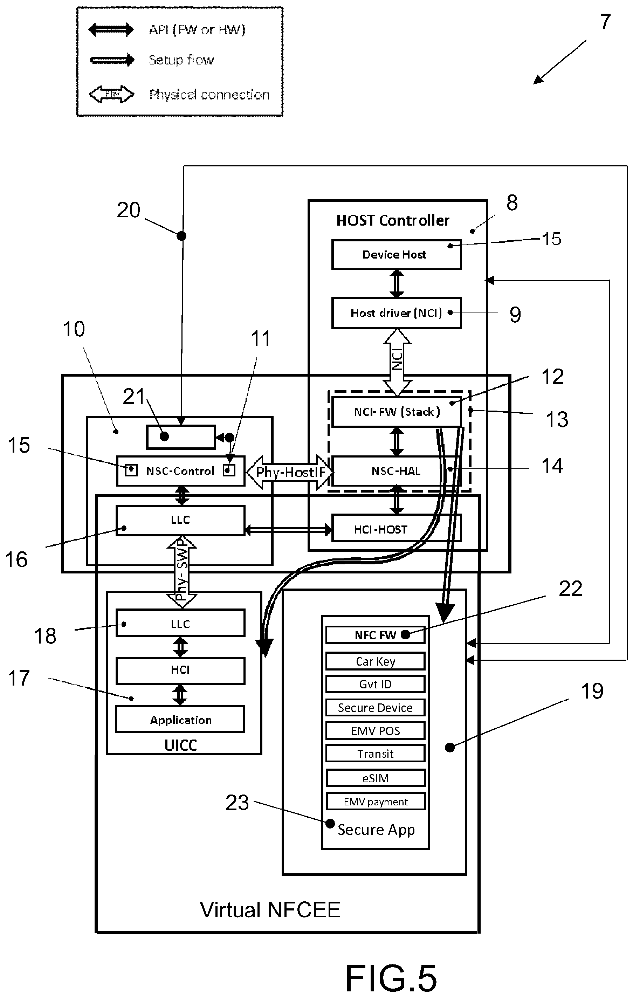

Figure 5 discloses a mobile 7 according to the invention that is built to process a NFC application as a wireless interface communication type application with the "split stack" NFC architecture and which mobile 7 is built to emulate a smart card with a secure element. To achieve that mobile 7 comprises a host controller circuit 8 built to process device applications, that use the NFC application, and built to process a host driver 9 that communicates wired based on a first interface protocol, which is the NCI interface protocol defined by the NFC Forum.

Mobile 7 furthermore comprises a NFC controller circuit 10 built to process a wireless interface for the NFC application and built to process a controller soft driver 11 that communicates wired with the host controller circuit 8. The NFC controller circuit 10 is the integrated circuit in mobile 7 to enable the Near Field Communication feature, which is well known to the person skilled in the art. NFC technology has been developed by an industry consortium under the name of NFC Forum (http://www.nfc-forum.ofg) and derives from RFID technology. The NFC controller circuit 10 is connected to an RFID antenna not shown in the figures and hosts the contactless interface to communicate with other NFC enabled devices. The over the air NFC contactless interface protocol is standardized in ISO 18.092, ISO14.443, ISO15.693, NFC Forum Specifications and EMVCo and has to be processed in defined timeframes. Further time critical or performance critical tasks are:
1. Delay time/guard time which means to transmit data not too early and not too late.
2. EMVCo timing for resetting the operating field.
3. NFC Active Mode collision avoidance.
4. Timings for Waiting Time Extensions.
5. Electro magnetic disturbance handling (EMD).

In the "split stack" NFC architecture NFC controller circuit 10 processes time critical tasks or performance critical tasks to realize this NFC contactless interface protocol, what helps to reduce the latency requirements of the host controller circuit 8.

The NFC Forum Specification "NFC Controller Interface (NCI)" defines the interface protocol to be used to enable communication between the host controller circuit 8 and the NFC controller circuit 10. The host controller circuit 8 implements this NCI Interface with a stack of software named host driver 9 that communicates based on the NCI interface with a stack of software named controller driver 12 (NCI-FW (Stack)) as shown in figure 5, which is part of the Layer 4 protocol shown in figure 4. This controller driver 12 as part of a first transmission module 13 processes and implements the NCI interface. Either controller driver 12 or other parts of the first transmission module 13 process all none-time critical and/or memory consuming tasks of a Near Field Communication application of the mobile phone 7. Typical Near Field Communication applications are for instance a card emulation application or a point of sale application as known to a person skilled in the art.

The first transmission module 13 furthermore comprises a host soft driver 14 that communicates with a controller driver or NFC controller soft driver 11 based on a second interface protocol. The NFC controller circuit 10 furthermore comprises a second transmission module 15 that processes all time critical tasks for the Near Field communication type application towards the Near Field Communication type contactless interface. In addition to that the second transmission module 15 may also process recurring tasks or tasks which influence to overall throughput time. The NFC controller circuit 10, as shown in figure 5, furthermore comprises a logic link layer 16 to interface over a Single Wire Protocol with a smart card 17.

The "split stack" NFC architecture of the host controller circuit 8 and the NFC controller circuit 10, as shown in figure 5, has the advantage compared to the NFC standard architecture that the second transmission module 15 is only a relative small stack of software named controller firmware that has to be processed by the NFC controller circuit 10 to realize the time critical tasks or performance critical tasks to enable the Near Field Communication application. All other none-time critical tasks and memory or data consuming task of the Near Field Communication application are processed within the first transmission module 14 with the host controller 8 that has high processing power, enough memory space and an easy linkage to other functionalities of mobile 7.

Figure 5 discloses one of the most important wireless interface communication type applications for mobile 7 that processes a Near Field Communication application to emulate a smart card via a UICC as secure element. Figure 5 shows the way of the setup of UICC on HCI. In order to allow card emulation via the UICC a connection via the HCI network needs to be established. This is done via the HCI-Host implementation in the host controller circuit 8. The physical connection (usually a Single Wire Protocol SWP) as well as a logic link layer 18 of the smart card 17 are time critical tasks of the Near Field Communication application and therefore handled on the NFC controller circuit 10.

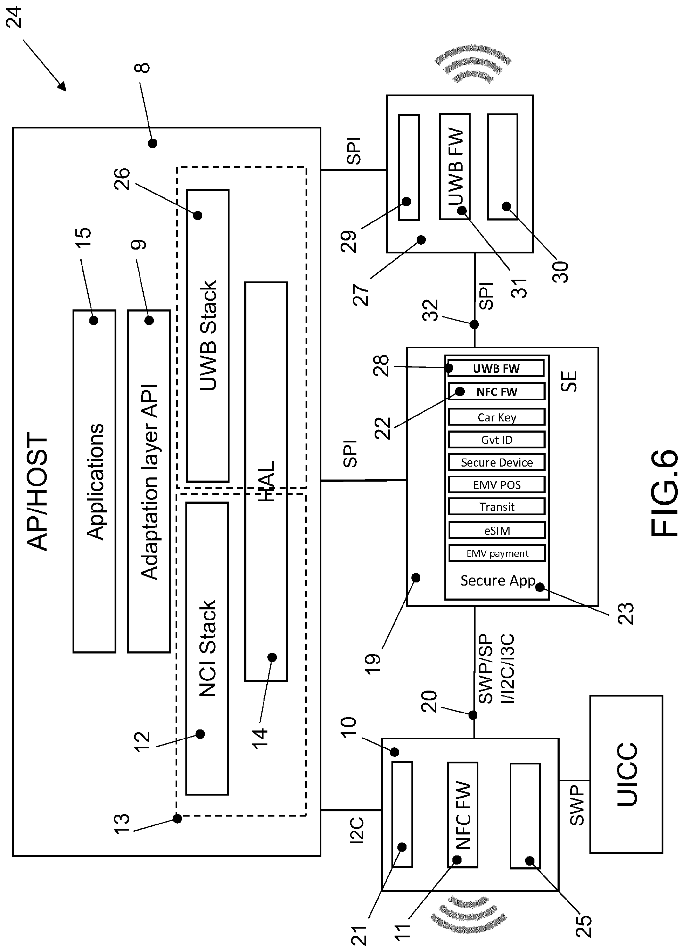

Mobile 7 comprises a secure element circuit 19 to store secure application or key information, just as some examples. A person skilled in the art knows the term of a secure element and security measures used to protect information stored there, which secure information may cover all kind of other information to be protected for applications, as shown in figures 5 and 6. Secure element circuit 19 comprises a direct hardware connection 20 to the NFC controller circuit 10. This wired hardware connection 20 may be realized by a single wire protocol or a Serial Peripheral Interface bus or an I2C bus or an I3C bus just to name some examples. The secure element circuit 19 may be realized as separate integrated circuit as shown in figures 5 and 6 or as part of host controller circuit 8.

NFC controller circuit 10 of mobile 7 furthermore comprises a boot loader circuit 21 built to request a transfer of a stack of controller firmware 22 stored in the secure element circuit 19. This stack of controller firmware 22 has been stored in an secure and approved way either during the manufacturing of mobile 7 or during an initial set-up of the user in a secure environment or during any other procedure that ensures that the controller firmware 22 is the approved and correct software version to be processed in controller soft driver 11. After receiving this request of transfer of the controller firmware 22, an app processor 23 of secure element circuit 19 transfers the controller firmware 22 via the wired hardware connection 20 and boot loader circuit 21 into a memory of controller soft driver 11, which processes this transferred approved controller firmware 22 to enable the NFC contactless interface of NFC controller circuit 10. These measures ensure that NFC controller circuit 10 always processes the approved controller firmware 22 and makes it impossible for a hacker to manipulate the controller firmware 22 processed by controller soft driver 11 and to use this manipulation as a door into a secure channel to steal secure information. Such a man in the middle attack has been used for instance to steal information about a credit card account stored in a state of the art secure element circuit during a transfer of this secure information through an in principle secure channel while processing the NFC application to pay at a payment terminal.

The boot loader circuit 21 is built to request the transfer of the stack of controller firmware 22 immediately after power-on during a boot routine, what ensures that after each power-on of the mobile 7 the approved controller firmware 22 is loaded into the memory of controller soft driver 11 and processed by controller soft driver 11. Therefore any manipulation that may have happened before power-down is removed at every power-on of mobile 7. Furthermore and to increase the security, boot loader circuit 21 may at any time during normal processing request another transfer of the controller firmware 22 from secure element circuit 19 to ensure integrity of the controller firmware processed.

In another embodiment of the invention boot loader circuit 21 is built to process an integrity verification of the controller firmware stored in the memory of controller soft driver 11 and processed by the controller soft driver 11 with the approved and correct controller firmware 22 stored in the secure element circuit 19. This integrity verification may include to request from secure element circuity 19 a hash value or other comparable integrity information about the stack of controller firmware 22 stored in the secure element circuity 19 to compare it with the integrity information evaluated from the controller firmware actually processed by the controller soft driver 11. In case the comparison of the received and evaluated integrity information provides differences, boot loader circuit 21 may react in different ways. It may send a new request for a transfer of the stack of controller firmware 22 and replace the actual processed and in the memory of the controller soft driver 11 stored controller firmware by the correct and approved version received from the secure element circuitry 19. In this or another embodiment of the invention boot loader circuit 21 may send information via the wired hardware connection 20 to host controller 8 or via the NFC wireless interface to another NFC device that a hacker attack has been identified.

Figures 6 discloses a more generalized block diagram how a mobile 24 with the "split stack" NFC architecture and boot loader circuit 21 according to the invention enables the NFC wireless application and in addition an Ultra-Wideband interface communication type application. The same reference numbers have been added to the blocks as explained in relation to figure 5 in detail. A memory 25 is used to store the stack of controller firmware in NFC controller circuit 10. In addition to the NFC wireless interface of mobile 7, as explained in relation to figure 5, mobile 24 furthermore enables an Ultra-Wideband wireless interface and application for the mobile 24 that uses this wireless interface. To enable that, host controller 8 of mobile 24 comprises an UWB controller driver 26 that processes and implements the UWB interface in the host controller 8. The first interface protocol processed for the communication between host driver 9 and UWB controller driver 26 is a FiRa Consortium defined UCI as known to a person skilled in the art. An UWB controller circuit 27 processes all time critical tasks for the UWB communication type application towards the UWB type contactless interface. Secure element circuitry 19 stores a stack of UWB controller firmware 28 and boot loader circuit 29 of UWB controller circuit 27 is built to request the transfer of this UWB controller firmware 28 into a memory 30 of UWB controller circuit 27 to be processed by UWB controller soft driver 31. Secure element circuitry 19 and UWB controller circuit 27 are in direct hardware connection via a Serial Peripheral Interface bus 32. All these measures ensure that UWB controller circuit 27 always processes the approved UWB controller firmware 28 and makes it impossible for a hacker to manipulate the UWB controller firmware 28 processed by UWB controller soft driver 31 and to use this manipulation as a door into a secure channel to steal secure information.

In above explained embodiments of the invention mobiles 7 and 24 process a method with the following operations:
- process a first transmission module with the host controller circuit to communicate wired with the host driver based on the first interface protocol and that communicates wired with the controller driver based on a second interface protocol;
- request a transfer of a stack of controller firmware stored in the secure element circuit into a memory of the wireless interface controller circuit;
- process the transferred and stored controller firmware with the wireless interface controller circuit to enable the wireless interface communication type contactless interface.

This method enables to achieve the advantages as explained above with regard to the embodiments of the invention.

It may be stated that devices that process a Near Field Communication type application may not only be mobile phones, but other mobile devices, wearables and IOT devices as well. The disclosed invention is advantaneaous for devices that process a Near Field communication application, but would be advantaneous for devices that use similar type of wireless applications as well.

Furthermore it is stated that a NFC controller circuit could be realized by a microprocessor or a dedicated integrated circuit.

In other embodiments of the invention a special method is realized to load the controller firmware in a secure and approved way into the secure element ciruit.

## Claims

1. Device (7; 24) built to process a wireless interface communication type application, which device (7; 24) comprises:
a host controller circuit (8) built to process device applications, that use the wireless interface communication type application, and built to process a host driver (9) that communicates wired based on a first interface protocol (NCI, UCI);
a wireless interface controller circuit (10; 27) built to process a wireless interface for the wireless interface communication type application and built to process a controller driver (11; 31) that communicates wired with the host controller circuit (8);
and wherein the host controller circuit (8) is built to process a first transmission module (13) that communicates wired with the host driver (9) based on the first interface protocol (NCI, UCI) and communicates wired with the controller driver (11; 31) based on a second interface protocol (I2C, SPI, I3C) , **characterized in that**
the device (7; 24) comprises a secure element circuit (19) to store secure application or key information, which secure element circuit (19) comprises a direct hardware connection (20; 32) to the wireless interface controller circuit (10; 27) and wherein the wireless interface controller circuit (10; 27) comprises a boot loader circuit (21; 29) built to request a transfer of a stack of controller firmware (22; 28) stored in the secure element circuit (19) into a memory (25, 30) of the wireless interface controller circuit (10; 27) to be processed by the wireless interface controller circuit (10; 27) to enable the wireless interface communication type contactless interface.

2. Device (7; 24) according to claim 1, wherein the boot loader circuit (21; 29) is built to request the transfer of the stack of controller firmware (22; 28) immediately after power-on during a boot routine or at any time during normal processing to ensure integrity of the controller firmware processed.

3. Device (7; 24) according to one of the claims 1 or 2, wherein the boot loader circuit (21; 29) is built to process an integrity verification of the controller firmware stored in the memory (25; 30) of the wireless interface controller circuit (10; 27) and processed by the wireless interface controller circuit (10; 27) with the controller firmware (22; 28) stored in the secure element circuit (19).

4. Device (7; 24) according to one of the claims 1 to 3, wherein the wireless interface communication type application is realized as Near Field Communication type application and wherein the first interface protocol (NCI) is a "NFC Controller Interface (NCI)" specified in a NFC Forum Specification.

5. Device (24) according to one of the claims 1 to 4, wherein the wireless interface communication type application is realized as Ultra-Wideband type application and wherein the first interface protocol is a "UCI specified by the FiRa Consortium.

6. Device according to one of the claims 1 to 5, wherein the first interface protocol is an "EMV Contactless Specifications for Payment Systems" based on ISO/IEC 7816 and ISO/IEC 14.443 or another proprietary interface protocol.

7. Chipset for a device (7; 24) that processes a wireless interface communication type application, **characterized in, that** the chipset comprises a host controller circuit (8) and a wireless interface controller circuit (10; 27) as claimed in claims 1 to 6.

8. Method to process a wireless interface communication type application with a device (7; 24) according to one of the claims 1 to 6, wherein the following operations are processed:
• process a first transmission module (13) with the host controller circuit (8) to communicate wired with the host driver (9) based on the first interface protocol (NCI, UCI) and that communicates wired with the controller driver (11; 31) based on a second interface protocol (I2C; SPI, I3C);
• request a transfer of a stack of controller firmware (22; 28) stored in the secure element circuit (19) into a memory (25; 30) of the wireless interface controller circuit (10; 27);
• process the transferred and stored controller firmware with the wireless interface controller circuit (10; 27) to enable the wireless interface communication type contactless interface.

9. Method according to claim 8, wherein the following operations are processed:
• request the transfer of the stack of controller firmware (22; 28) immediately after power-on during a boot routine or at any time during normal processing to ensure integrity of the controller firmware processed.

10. Method according to one of the claims 8 to 9, wherein the following operations are processed:
• process an integrity verification of the controller firmware stored in the memory (25; 30) of the wireless interface controller circuit (10; 27) and processed by the wireless interface controller circuit (10; 27) with the controller firmware (22; 28) stored in the secure element circuit (19).

11. Method according to one of the claims 8 to 10, wherein the following operations are processed:
• process the "NFC Controller Interface (NCI)" specified in a NFC Forum Specification as first interface protocol (NCI).

12. Method according to one of the claims 8 to 10, wherein the following operations are processed:
• process the UCI specified by the RiFa Consortium as first interface protocol (UCI).

## Patentansprüche

1. Vorrichtung (7; 24), die dazu ausgebildet ist, eine Anwendung vom Typ drahtlose Schnittstellenkommunikation zu verarbeiten, wobei die Vorrichtung (7; 24) umfasst:
eine Host-Controller-Schaltung (8), die dazu ausgebildet ist, Vorrichtungsanwendungen zu verarbeiten, die die Anwendung vom Typ drahtlose Schnittstellenkommunikation nutzen, und dazu ausgebildet ist, einen Host-Treiber (9) zu verarbeiten, der auf der Grundlage eines ersten Schnittstellenprotokolls (NCI, UCI) kabelgebunden kommuniziert;
eine Controller-Schaltung (10; 27) für drahtlose Schnittstellen, die dazu ausgebildet ist, eine drahtlose Schnittstelle für die Anwendung vom Typ drahtlose Schnittstellenkommunikation zu verarbeiten, und die dazu ausgebildet ist, einen Controller-Treiber (11; 31) zu verarbeiten, der kabelgebunden mit der Host-Controller-Schaltung (8) kommuniziert;
und wobei die Host-Controller-Schaltung (8) dazu ausgebildet ist, ein erstes Übertragungsmodul (13) zu verarbeiten, das auf der Grundlage des ersten Schnittstellenprotokolls (NCI, UCI) kabelgebunden mit dem Host-Treiber (9) kommuniziert und auf der Grundlage eines zweiten Schnittstellenprotokolls (I2C, SPI, I3C) kabelgebunden mit dem Controller-Treiber (11; 31) kommuniziert, **dadurch gekennzeichnet, dass**
die Vorrichtung (7; 24) eine Secure-Element-Schaltung (19) zum Speichern sicherer Anwendungs- oder Schlüsselinformationen umfasst, wobei die Secure-Element-Schaltung (19) eine direkte Hardwareverbindung (20; 32) zur Controller-Schaltung (10; 27) für drahtlose Schnittstellen umfasst und wobei die Controller-Schaltung (10; 27) für drahtlose Schnittstellen eine Bootloader-Schaltung (21; 29) umfasst, die dazu ausgebildet ist, eine Übertragung eines in der Secure-Element-Schaltung (19) gespeicherten Stapels von Controller-Firmware (22; 28) in einen Speicher (25, 30) der Controller-Schaltung (10; 27) für drahtlose Schnittstellen anfordert, damit diese von der Controller-Schaltung (10; 27) für drahtlose Schnittstellen verarbeitet wird, um die kontaktlose Schnittstelle vom Typ drahtlose Schnittstellenkommunikation zu ermöglichen.

2. Vorrichtung (7; 24) nach Anspruch 1, wobei die Bootloader-Schaltung (21; 29) dazu ausgebildet ist, die Übertragung des Stapels von Controller-Firmware (22; 28) unmittelbar nach dem Einschalten während einer Boot-Routine oder zu jedem beliebigen Zeitpunkt während der normalen Verarbeitung anzufordern, um die Integrität der verarbeiteten Controller-Firmware sicherzustellen.

3. Vorrichtung (7; 24) nach einem der Ansprüche 1 oder 2, wobei die Bootloader-Schaltung (21; 29) dazu ausgebildet ist, eine Integritätsprüfung der in dem Speicher (25; 30) der Controller-Schaltung (10; 27) für drahtlose Schnittstellen gespeicherten und von der Controller-Schaltung (10; 27) für drahtlose Schnittstellen verarbeiteten Controller-Firmware mit der in der Secure-Element-Schaltung (19) gespeicherten Controller-Firmware (22; 28) zu verarbeiten.

4. Vorrichtung (7; 24) nach einem der Ansprüche 1 bis 3, wobei die Anwendung vom Typ drahtlose Schnittstellenkommunikation als Anwendung vom Typ Nahfeldkommunikation (NFC) realisiert ist und wobei das erste Schnittstellenprotokoll (NCI) ein in einer NFC-Forum-Spezifikation festgelegtes "NFC Controller Interface (NCI)" ist.

5. Vorrichtung (24) nach einem der Ansprüche 1 bis 4, wobei die Anwendung vom Typ drahtlose Schnittstellenkommunikation als Anwendung vom Typ Ultra-Wideband realisiert ist und wobei das erste Schnittstellenprotokoll ein "UCI" ist, das vom FiRa-Konsortium spezifiziert wurde.

6. Vorrichtung nach einem der Ansprüche 1 bis 5, wobei das erste Schnittstellenprotokoll eine auf ISO/IEC 7816 und ISO/IEC 14.443 basierende "EMV-Spezifikation für kontaktlose Zahlungssysteme" oder ein anderes proprietäres Schnittstellenprotokoll ist.

7. Chipsatz für eine Vorrichtung (7; 24), die eine Anwendung vom Typ drahtlose Schnittstellenkommunikation verarbeitet, **dadurch gekennzeichnet, dass** der Chipsatz eine Host-Controller-Schaltung (8) und eine Controller-Schaltung (10; 27) für drahtlose Schnittstellen gemäß den Ansprüchen 1 bis 6 umfasst.

8. Verfahren zur Verarbeitung einer Anwendung vom Typ drahtlose Schnittstellenkommunikation mit einer Vorrichtung (7; 24) gemäß einem der Ansprüche 1 bis 6, wobei die folgenden Vorgänge verarbeitet werden:
• Verarbeiten eines ersten Übertragungsmoduls (13) mit der Host-Controller-Schaltung (8), um auf der Grundlage des ersten Schnittstellenprotokolls (NCI, UCI) kabelgebunden mit dem Host-Treiber (9) kommuniziert und auf der Grundlage eines zweiten Schnittstellenprotokolls (I2C; SPI, I3C) kabelgebunden mit dem Controller-Treiber (11; 31) kommuniziert;
• Anfordern einer Übertragung eines Stapels von Controller-Firmware (22; 28), die in der Secure-Element-Schaltung (19) gespeichert ist, in einen Speicher (25; 30) der Controller-Schaltung (10; 27) für drahtlose Schnittstellen;
• Verarbeiten der übertragenen und gespeicherten Controller-Firmware mit der Controller-Schaltung (10; 27) für drahtlose Schnittstellen, um die kontaktlose Schnittstelle vom Typ drahtlose Schnittstellenkommunikation zu ermöglichen.

9. Verfahren nach Anspruch 8, wobei die folgenden Vorgänge verarbeitet werden:
• Anfordern der Übertragung des Stapels von Controller-Firmware (22; 28) unmittelbar nach dem Einschalten während einer Boot-Routine oder zu einem beliebigen Zeitpunkt während der normalen Verarbeitung, um die Integrität der verarbeiteten Controller-Firmware sicherzustellen.

10. Verfahren nach einem der Ansprüche 8 bis 9, wobei die folgenden Vorgänge verarbeitet werden:
• Durchführen einer Integritätsprüfung der in dem Speicher (25; 30) der Controller-Schaltung (10; 27) für drahtlose Schnittstellen gespeicherten und von der Controller-Schaltung (10; 27) für drahtlose Schnittstellen verarbeiteten Controller-Firmware mit der in der Secure-Element-Schaltung (19) gespeicherten Controller-Firmware (22; 28).

11. Verfahren nach einem der Ansprüche 8 bis 10, wobei die folgenden Vorgänge verarbeitet werden:
• Verarbeiten des in einer NFC-Forum-Spezifikation festgelegten "NFC Controller Interface (NCI)" als erstes Schnittstellenprotokoll (NCI).

12. Verfahren nach einem der Ansprüche 8 bis 10, wobei die folgenden Vorgänge verarbeitet werden:
• Verarbeiten des vom RiFa-Konsortium spezifizierten UCI als erstes Schnittstellenprotokoll (UCI).

## Revendications

1. Dispositif (7; 24) conçu pour traiter une application de type communication d'interface sans fil, le dispositif (7; 24) comprenant:
un circuit de contrôleur hôte (8) conçu pour traiter des applications du dispositif utilisant la application de type communication d'interface sans fil et conçu pour traiter un pilote de hôte (9) communiquant par câble selon un premier protocole d'interface (NCI, UCI);
un circuit de contrôleur d'interface sans fil (10; 27) conçu pour traiter une interface sans fil pour l'application de type communication d'interface sans fil et conçu pour traiter un pilote de contrôleur (11; 31) communiquant par câble avec le circuit de contrôleur hôte (8);
et dans lequel le circuit de contrôleur hôte (8) est conçu pour traiter un premier module de transmission (13) communiquant par câble avec le pilote de hôte (9) selon le premier protocole d'interface (NCI, UCI) et communiquant par câble avec le pilote de contrôleur (11; 31) selon un second protocole d'interface (I2C, SPI, I3C), **caractérisé en ce que**:
le dispositif (7; 24) comprend un circuit d'élément sécurisé (19) pour stocker des informations d'application sécurisée ou des informations clés, le circuit d'élément sécurisé (19) comprenant une connexion matérielle directe (20; 32) au circuit de contrôleur d'interface sans fil (10; 27), et dans lequel le circuit de contrôleur d'interface sans fil (10; 27) comprend un circuit de chargeur d'amorçage (21; 29) conçu pour demander le transfert d'une pile de microprogrammes de contrôleur (22; 28) stockés dans le circuit d'élément sécurisé (19) vers une mémoire (25; 30) du circuit de contrôleur d'interface sans fil (10; 27) pour être traités par le circuit de contrôleur d'interface sans fil (10; 27) afin d'activer la interface sans contact de type communication d'interface sans fil.

2. Dispositif (7; 24) selon la revendication 1, dans lequel le circuit de chargeur d'amorçage (21; 29) est conçu pour demander le transfert de la pile de microprogrammes de contrôleur (22; 28) immédiatement après la mise sous tension lors d'une routine d'amorçage ou à tout moment pendant le traitement normal afin de garantir l'intégrité du microprogramme de contrôleur traité.

3. Dispositif (7; 24) selon l'une des revendications 1 ou 2, dans lequel le circuit de chargeur d'amorçage (21; 29) est conçu pour traiter une vérification d'intégrité du microprogramme de contrôleur stocké dans la mémoire (25; 30) du circuit de contrôleur d'interface sans fil (10; 27) et traité par le circuit de contrôleur d'interface sans fil (10; 27) avec le microprogramme de contrôleur (22; 28) stocké dans le circuit de l'élément sécurisé (19).

4. Dispositif (7; 24) selon l'une des revendications 1 à 3, dans lequel l'application de type communication d'interface sans fil est réalisée comme une application de type communication en champ proche et dans lequel le premier protocole d'interface (NCI) est une "interface de contrôleur NFC (NCI)" spécifiée dans une spécification du NFC Forum.

5. Dispositif (24) selon l'une des revendications 1 à 4, dans lequel l'application de type communication d'interface sans fil est réalisée comme une application de type bande ultralarge et dans lequel le premier protocole d'interface est un UCI spécifié par le consortium FiRa.

6. Dispositif selon l'une des revendications 1 à 5, dans lequel le premier protocole d'interface est une "spécification EMV sans contact pour les systèmes de paiement" basée sur les normes ISO/IEC 7816 et ISO/IEC 14.443 ou un autre protocole d'interface propriétaire.

7. Jeu de puces pour un dispositif (7; 24) traitant une application de type communication d'interface sans fil, **caractérisé en ce que** le jeu de puces comprend un circuit de contrôleur hôte (8) et un circuit de contrôleur d'interface sans fil (10; 27) tels que revendiqués dans les revendications 1 à 6.

8. Procédé de traitement d'une application de type communication d'interface sans fil avec un dispositif (7; 24) selon l'une des revendications 1 à 6, dans lequel les opérations suivantes sont traitées:
• traiter un premier module de transmission (13) avec le circuit de contrôleur hôte (8) pour communiquer par câble avec le pilote de hôte (9) selon le premier protocole d'interface (NCI, UCI) et communiquant par câble avec le pilote de contrôleur (11; 31) selon un second protocole d'interface (I2C; SPI, I3C);
• demander le transfert d'une pile de microprogrammes de contrôleur (22; 28) stockés dans le circuit d'élément sécurisé (19) vers une mémoire (25; 30) du circuit de contrôleur d'interface sans fil (10; 27);
• traiter le microprogramme de contrôleur transféré et stocké avec le circuit de contrôleur d'interface sans fil (10; 27) afin d'activer la interface sans contact de type communication d'interface sans fil.

9. Procédé selon la revendication 8, dans lequel les opérations suivantes sont traitées:
• demander le transfert de la pile de microprogrammes de contrôleur (22; 28) immédiatement après la mise sous tension lors d'une routine d'amorçage ou à tout moment pendant le traitement normal afin de garantir l'intégrité du microprogramme de contrôleur traité.

10. Procédé selon l'une des revendications 8 à 9, dans lequel les opérations suivantes sont traitées:
• traiter une vérification d'intégrité du microprogramme de contrôleur stocké dans la mémoire (25; 30) du circuit de contrôleur d'interface sans fil (10; 27) et traité par le circuit de contrôleur d'interface sans fil (10; 27) avec le microprogramme de contrôleur (22; 28) stocké dans le circuit de l'élément sécurisé (19).

11. Procédé selon l'une des revendications 8 à 10, dans lequel les opérations suivantes sont traitées:
• traiter "l'interface de contrôleur NFC (NCI)" spécifiée dans une spécification du NFC Forum en tant que premier protocole d'interface (NCI).

12. Procédé selon l'une des revendications 8 à 10, dans lequel les opérations suivantes sont traitées:
• traiter l'UCI spécifié par le consortium RiFa en tant que premier protocole d'interface (UCI).
